(19) Europäisches Patentamt
European Patent Office
Office européen des brevets

(11) **EP 2 816 323 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(51) Int Cl.:
***G01D 5/353*** (2006.01)  ***G01V 1/22*** (2006.01)

(21) Anmeldenummer: **13172488.2**

(22) Anmeldetag: **18.06.2013**

(54) **Verfahren und Vorrichtung zur Messung der akustischen Umgebung einer Glasfaser**

Method and device for measuring the acoustic environment of an optical fibre

Procédé et dispositif de mesure de l'environnement acoustique d'une fibre optique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.12.2014 Patentblatt 2014/52**

(73) Patentinhaber: **Siemens Aktiengesellschaft
80333 München (DE)**

(72) Erfinder: **Zhuber-Okrog, Kuno
1230 Wien (AT)**

(74) Vertreter: **Maier, Daniel Oliver et al
Siemens AG
Postfach 22 16 34
80506 München (DE)**

(56) Entgegenhaltungen:
**WO-A2-2012/030814    US-A1- 2012 280 117**

EP 2 816 323 B1

**Beschreibung**

Technisches Gebiet

Die Erfindung betrifft ein Verfahren zur Messung der akustischen Umgebung einer Glasfaser durch Messung der optischen Pfadlänge der Glasfaser durch Einleitung eines Lichtsignals und durch Auswertung des in der Glasfaser rückgestreuten Lichtsignals (wobei mit Licht verallgemeinernd auch Infrarotstrahlung gemeint ist), sowie eine entsprechende Vorrichtung. Darunter wird ein Verfahren bzw. eine Vorrichtung zur Messung äußerer Einflüsse auf eine Glasfaser verstanden. Die Erfindung dient zur gleichzeitigen akustischen Überwachung eines langgestreckten oder sich großräumig erstreckenden räumlichen Bereichs, ähnlich wie mit einer Vielzahl von Mikrofonen. Als Sensor wird eine Glasfaser verwendet.

Es lässt sich Schall in Luft, Körperschall im Erdboden oder in Bauwerken, Schall im Wasser oder anderen Flüssigkeiten beobachten und messen. Typische Anwendungen sind die Überwachung von Absperrungen und Umzäunungen und die Überwachung von Kabeln, Pipelines und Rohren, wie beispielsweise Wasserleitungen. Damit lassen sich Baggerarbeiten in der Nähe von Kabeln, versuchter Kabeldiebstahl und Manipulationen an Pipelines bereits frühzeitig erkennen. Der Austritt von Gasen oder Flüssigkeiten ist erkennbar. Abwasserkanäle lassen sich überwachen und Verstopfungen lokalisieren.

Eine weitere Anwendung ist die Verkehrsüberwachung. Damit lassen sich einzelne Fahrzeuge erkennen und verfolgen.

Auch zur Aufnahme von seismischen Wellen natürlicher Herkunft, oder von künstlich erzeugten seismischen Wellen zur Bodenerkundung ist die erfindungsgemäße Methode einsetzbar. Eine spezielle Anwendung ist die Feststellung der Schallgeschwindigkeit in der Umgebung von Bohrungen, wodurch Bodenschätze erkannt werden können.

Es wurde dazu lange Zeit nur die Änderung der optischen Lichtleistung am Ausgang eines Interferometers benutzt, die durch Mehrdeutigkeit des Interferometers nur eine ungefähre Abschätzung der Amplitude bzw. Lautstärke des Schalls ermöglicht. Damit lassen sich laute Ereignisse und die zeitliche Abfolge von lauten Ereignissen wie zum Beispiel von Schritten erkennen. Es ist jedoch nicht möglich, ein Ereignis selbst zu identifizieren und das akustische Spektrum zu messen.

Stand der Technik

In der US 7,872,736 B2, Rogers et al., "Detecting a disturbance in the propagation of light in an optical waveguide", wird eine Methode gezeigt, die über den Ort gemittelte Phasenschwankungen detektieren kann, die mit der Änderung der optischen Pfadlänge zusammenhängen. Es wird eine Doppelpuls-Methode vorgeschlagen. Nach wiederholter Aussendung des Doppelpulses wird die Interferenz von beiden Pulshälften gemessen. Diese Interferenz hängt nichtlinear von der Phase ab. Jede Interferenz wird mit der vorangegangenen Interferenz durch Differenzbildung verglichen. Die Quadrate der Differenzen von verschiedenen Faserabschnitten werden gemittelt. Damit werden Stellen mit geringer Reflexions-Amplitude und solche mit hoher Reflexions-Amplitude gemittelt. Die optische Pfadlänge hängt wiederum von der akustischen Umgebung der Glasfaser ab. Es kann mit dieser Methode zwar die Stärke der Phasenschwankung, aber nicht das Vorzeichen der Phasenänderung ermittelt werden.

In der US 7,652,245 B2, Crickmore et al., "Traffic sensing and monitoring apparatus", wird eine Doppelpuls-Methode vorgestellt, wo beide Doppelpuls-Hälften sich in der Frequenz unterscheiden und der Frequenzunterschied größer ist als die Pulswiederholfrequenz. Das Patent legt jedoch die Art der Verarbeitung der gemessenen Daten nicht offen.

Eine verbesserte Methode wird in der Patentanmeldung US 2012/0162639 A beschrieben. Es werden die Änderungen der optischen Pfadlänge und damit die akustische Umgebung einer Glasfaser ermittelt. Die Vorrichtung nützt eine spezielle Form des Interferometers mit Faraday-Spiegeln. Das hat den Vorteil, dass ein Polarisationsabgleich des Interferometers entfällt. Durch einen sogenannten MxM-Koppler, dem prinzipiell Phasenverschiebungen anhaften, wird ein Mehrfachinterferometer gebildet.

Sowohl in der Sensorik als auch in der kohärenten Empfangstechnik zur optischen Datenübertragung werden MxM-Koppler verwendet. Bereits 1986 erschien T. Niemeier and R. Ulrich, "Quadrature outputs from fiber interferometer with 4x4 coupler," Opt. Lett. 11, pp. 677-679 (1986). Eine ausführliche Beschreibung der Verwendung von 3x3-Kopplern steht in Y. Takushima et al., "Measurement of Differential Phasor Diagram of Multilevel DPSK Signals by Using an Adjustment-Free Delay Interferometer Composed of a 3x3 Optical Coupler", IEEE Journal of Lightwave Technology v. 27 n. 6, (2009) pp. 718-730. Insbesondere Fig. 5 zeigt eine Ausführung wie US 2012/0162639. Auch Xie, Winzer et al., "Colorless coherent receiver using 3x3 coupler hybrids and single-ended detection", Optical Express 20-2 (2012), 1164ff, beschreibt einen Quadratursignal-Empfänger.

In der Methode nach der US 2012/0162639 A wird eine Möglichkeit dargestellt, die akustische Umgebung einer Glasfaser zu messen. Allerdings ist es in der Anordnung nach US 2012/0162639 A nicht ohne teuren und platzintensiven Mehraufwand an optischen Bauelementen möglich, gleichzeitig mehrere unterschiedlich lange Überwachungsabschnitte zu erfassen und es ist sehr schwierig, ein extrem schmalbandiges optisches Filter der Sendefrequenz nachzuführen.

In der WO2012/030814 A2 wird ein Verfahren zur Messung von Vibrationen in der Umgebung einer Glasfaser durch Einleitung eines Lichtsignals in die Glasfaser und Auswertung des rückgestreuten Lichtsignals beschrieben. Aus dem Licht einer Lichtquelle werden Lichtimpulse erzeugt, die in eine Glasfaser eingeleitet werden. Ein in der Glasfaser rückgestreutes Lichtsignal wird ausgekoppelt und einer Verarbeitungseinheit zugeführt, die ein Quadratursignal mit einer In-Phase-Komponente und einer Quadraturkomponente erzeugt. Eine Trigger-Einheit koordiniert die optische Impulserzeugung und die Signalerfassung, wodurch Messwerte für unterschiedliche Überwachungsabschnitte entlang der Glasfaser gewonnen werden können.

Darstellung der Erfindung

Es ist eine Aufgabe der vorliegenden Erfindung, ein Verfahren und eine Vorrichtung zur Messung der akustischen Umgebung einer Glasfaser durch Messung der optischen Pfadlänge von Überwachungsabschnitten (monitoring sections) durch Einführen eines Lichtsignals in die Glasfaser und durch Messung des in der Glasfaser rückgestreuten Lichtsignals zur Verfügung zu stellen, mit denen die Messergebnisse und deren Auswertung schnell und mit großer Empfindlichkeit erhalten werden können.

Diese Aufgabe wird durch ein Verfahren mit den Merkmalen des Patentanspruchs 1 gelöst. Vorteilhafte Ausgestaltungen der Erfindung sind in den jeweiligen abhängigen Ansprüchen definiert.

Gemäß Anspruch 1 ist vorgesehen, dass aus dem rückgestreuten Lichtsignal für unterschiedliche überwachungsabschnitte jeweils ein kombiniertes Quadratursignal gebildet wird, dessen Phase und Amplitude numerisch ausgewertet wird, wobei die Phase als Maß für den Schalldruck und die Amplitude als Maß für die Signalgüte dient, damit der an mehreren Orten wirkende Schalldruck wiedergewonnen werden kann.

Durch diese Methode von verteilter akustischer Sensorik ist es möglich, die Signalform des akustischen Signals festzustellen und das akustische Spektrum zu vermessen. Ein kombiniertes Quadratursignal, auch als "differential phasor" bezeichnet, enthält als komplexe Zahl als Phase einen zur optischen Pfadlänge proportionalen Wert und als Amplitude die Stärke der zur Bildung des kombinierten Quadratursignals benutzten optischen Signale. Somit erfolgt eine quantitative Messung von akustischer Frequenz, Amplitude und Phase über einen großen Frequenz- und Dynamikumfang. Damit können zum Beispiel sogar Stimmen erkannt und Entfernungsmessungen durchgeführt werden. Durch weitere Signalverarbeitung ist eine Vielzahl von Anwendungen, z.B. als Richtmikrofon, möglich, wodurch die Erfindung nicht nur auf die angeführten Ausführungsbeispiele beschränkt ist.

In der Ausführungsform gemäß Anspruch 2 wird das Interferometer erfindungsgemäß - im Gegensatz zu körperlichen optischen Interferometern - numerisch aus abgetasteten Signalwerten gebildet, daher können Länge und Lage der Überwachungsabschnitte ohne Mechanik geändert werden. Eine Vielzahl von Messpaaren ergeben auch beim Ausfall einzelner schwacher Messwerte noch ein gutes Gesamtergebnis und verbessern das Signal-Rauschverhältnis. Die Rekonstruktion messtoten Raums durch Nachbarabschnitte ist möglich. Variable, auch dynamisch variierte Abschnittslängen können zur Detektion genutzt werden.

Bei dieser ersten Ausführungsform ist vorgesehen, dass einzelne periodische Lichtpulse verwendet werden, also

- dass das Lichtsignal ein periodischer Lichtpuls ist,
- dass für beide Polarisationen des rückgestreuten Lichtsignals jeweils ein Quadratursignal mit jeweils einer In-Phase-Komponente und einer Quadraturkomponente gebildet wird,
- dass diese zu mehreren festgelegten Abtastzeitpunkten abgetastet und gespeichert werden, wobei jeweils zwei Abtastzeitpunkte einem Überwachungsabschnitt der Glasfaser entsprechen,
- dass für jede Polarisation durch Vergleich der Phasen der beiden Quadratursignale jedes Überwachungsabschnittes und durch Multiplikation der Amplituden der beiden Quadratursignale numerisch die Komponenten eines vorläufigen kombinierten Quadratursignals jeweils einer Polarisation gebildet werden,
- dass die vorläufigen kombinierten Quadratursignale jeder Polarisation addiert werden und ein kombiniertes Quadratursignal bilden und
- dass aus einer Vielzahl von kombinierten Quadratursignalen die akustische Umgebung der Glasfaser rekonstruiert wird.

Insbesondere kann bei dieser Ausführungsform vorgesehen sein, dass das Lichtsignal mittels eines Lasers erzeugt wird, in einem Pulsformer daraus der periodische Lichtpuls erzeugt und in die Glasfaser geleitet wird, wobei das rückgestreute Lichtsignal aus der Glasfaser ausgekoppelt und einem optischen Zweipolarisations-Quadratur-Direktempfänger zugeleitet wird, die darin erzeugten In-Phase- und Quadratursignalkomponenten gespeichert und einem Multiplikations- und Additions/Subtraktions-Netzwerk zur Bildung der Komponenten des kombinierten Quadratursignals zugeführt werden. Diese Ausführungsform hat den Vorteil, dass eine Polarisationskorrektur entfallen kann.

Insbesondere kann vorgesehen sein, dass der optische Zweipolarisations-Quadratur-Direktempfänger ein optisches Zweipolarisations-90-Grad-Hybrid aufweist, dessen Ausgänge über Differenz-Photodetektoren und Tiefpassfilter geführt werden.

Alternativ kann vorgesehen sein, dass der optische Zweipolarisations-Quadratur-Direktempfänger nach eingangsseitigen Polarisationsteilern zwei optische 3x3-Koppler enthält, deren Ausgänge über Photodetektoren, Matrizen und Tiefpassfilter geführt werden.

Kern der Erfindung ist also, dass die akustische Umgebung einer Glasfaser rekonstruiert werden kann, dass bei einer ersten Ausführungsform ein optischer Puls in bekannter Weise generiert und auf eine Glasfaser gesendet wird. Die verteilte Rückreflexion wird in einem optischen Empfänger kohärent in elektrische Signale gewandelt. Dies ist neu in der Glasfaser-Rückstreu-Sensorik. Ein Vorteil ist, dass durch diese Wandlung ein Empfindlichkeitsgewinn erzielt wird, da bei der Mischung mit einem starken Lokaloszillatorsignal eine Verstärkung auftritt.

Ein besonderer Vorteil ist auch die Filterwirkung der Tiefpassfilter in den Ausführungen der Ansprüche 2-11 im Empfänger. Diese bewirken eine optische Filterung mit sehr kleiner Bandbreite im MHz-Bereich, wodurch Nebenfrequenzen, wie zum Beispiel spontane Brillouinstreuung und Ramanstreuung, unterdrückt werden. Wenn optische Verstärker eingesetzt werden, wird deren Rauschen (ASE) unterdrückt. Somit kann eine wünschenswerte oder erforderliche optische Verstärkung in allen Ausführungsbeispielen problemlos ausgeführt werden. Es werden auch inkohärente Lichtanteile unterdrückt, die durch optische Nichtlinearitäten entstehen.

Das Problem der Nachführung eines optischen Filters mit der Frequenz des Sendeimpulses entfällt, wenn das Laserlicht, das zur Erzeugung des Lichtpulses dient, gleichzeitig als Lokaloszillator genutzt wird.

Weiters läuft die Rückreflexion in derselben optischen Faser und das zu verschiedenen Zeitpunkten empfangene Signal wird von demselben optischen Empfänger in elektrische Signale gewandelt. Daher sind die Polarisationseigenschaften dieselben und man benötigt keine Polarisationssteller und keinen Polarisationsabgleich. Auch die Polarisationsabhängigkeit der optischen Bauelemente ist unkritisch, da die Optik nach einem Polarisationsstrahlteiler nur mehr für eine Polarisation verwendet wird und Bauelementtoleranzen im Nachhinein kompensiert werden können.

Für die Signalverarbeitung werden vorteilhafterweise viele Beginn/Ende-Paare von Überwachungsabschnitten benutzt. Damit erreicht man eine höhere Empfindlichkeit und gegenüber einer Realisierung in Optik eine wesentliche Kosteneinsparung.

Bei einer zweiten Ausführungsform der Erfindung ist vorgesehen,

- dass das Lichtsignal ein periodischer Doppelpuls ist, der jeweils aus zwei Pulsen besteht,
- dass einer der beiden Pulse relativ zum anderen phasenmoduliert ist,
- dass die Leistung des rückgestreuten Lichtsignals, das eine Überlagerung von beiden Pulsen enthält, zu mehreren festgelegten Abtastzeitpunkten abgetastet und gespeichert wird, wobei jeder Abtastzeitpunkt einem Überwachungsabschnitt der Glasfaser entspricht,
- dass ein kombiniertes Quadratursignal gebildet wird und
- dass aus einer Vielzahl von kombinierten Quadratursignalen die akustische Umgebung der Glasfaser rekonstruiert wird.

Der Vorteil der Doppelpuls-Methode liegt darin, dass quasi eine Markierung jedes Messergebnisses erfolgt. Sie besitzt bereits die grundlegende Funktionalität, ein Signal, das mit der Änderung der optischen Pfadlänge einhergeht, herzustellen. Dabei wird die Richtung der Änderung der optischen Pfadlänge korrekt wiederhergestellt. Durch die Vorverarbeitung auf Senderseite, wo nur eine Polarisation vorhanden ist, vermeidet man einen Polarisationsabgleich, wenn man polarisationserhaltende Fasern verwendet.

Mit der Doppelpuls-Methode ist eine automatische Offsetkorrektur möglich, was durch die Methoden in den Veröffentlichungen, die oben zum Stand der Technik genannt werden, nicht möglich ist.

Eine mögliche weitere Ausgestaltung der Doppelpuls-Methode besteht darin, dass das Lichtsignal mittels eines Lasers erzeugt wird, in einem Pulsformer mit Phasenmodulator daraus der periodische Doppelpuls erzeugt und in die Glasfaser geleitet wird, wobei das rückgestreute Lichtsignal aus der Glasfaser ausgekoppelt und über einen Photodetektor einer Speicherung zugeleitet wird, aus welcher mittels analytischer-Signal-Wiederherstellung mit Gleichstromsperre und Abwärtskonverter die Komponenten des kombinierten Quadratursignals erzeugt werden.

Dabei kann der der Pulsformer mit Phasenmodulator zwei angesteuerte Mach-Zehnder-Modulatoren oder einen Mach-Zehnder-Modulator mit zwei Ansteuerungen (dual drive Mach-Zehnder modulator) enthalten.

Weiters kann vorgesehen sein, dass Mach-Zehnder-Modulatoren oder akustooptische Modulatoren als Pulsformer verwendet werden, dass sich vor den Pulsformern ein Strahlteiler und danach ein Koppler befindet, in einem Zweig vor dem Koppler ein Phasenmodulator angeordnet ist und in einem Zweig eine optische Verzögerungsleitung enthalten ist.

Der Pulsformer mit Phasenmodulator kann jedoch auch so ausgeführt sein, dass der Pulsformer mit Phasenmodulator einen Hochfrequenzgenerator mit einem Phasenmodulator enthält oder dass die Hochfrequenz mit einer gleichwertigen Methode mit schaltbarer Phase erzeugt wird, dass im Pulsformer mit Phasenmodulator eingangsseitig weiters ein Strahlteiler und ausgangsseitig ein Koppler, in diesen Zweigen jeweils ein akustooptischer Modulator mit vorgeschaltetem Gate und optional in einem Zweig eine optische Verzögerungsleitung vorhanden ist.

Kern der Erfindung ist also im Sinne einer zweiten Ausführungsform, dass die akustische Umgebung einer Glasfaser rekonstruiert werden kann, dass dies durch eine besonders einfache und kostengünstige optische Ausrüstung ermöglicht wird, die wesentlich abgleichfrei ist, was den Abgleich von Polarisation als auch den Abgleich von elektrischen Offsetspannungen und -strömen betrifft.

Dem erfindungsgemäßen Verfahren entsprechende Vorrichtungen sind in den Ansprüchen 14 bis 23 enthalten.

Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:

Figur 1    eine schematische Darstellung der ersten Ausführungsvariante mit einzelnen Lichtpulsen,
Figur 2    einen Lichtpuls zu Fig. 1,
Figur 3    eine Kombination von Abtastzeitpunkten zu Fig. 1,
Figur 4    eine Kombination von Abtastzeitpunkten zu Fig. 1 mit zwei zu schwachen Messergebnissen,
Figur 5    eine mögliche Ausführungsform des Zweipolarisations-Quadratur-Direktempfängers aus Fig. 1,
Figur 6    eine weitere mögliche Ausführungsform des Zweipolarisations-Quadratur-Direktempfängers aus Fig. 1,
Figur 7    eine schematische Darstellung der zweiten Ausführungsvariante mit Doppelpulsen,
Figur 8    einen schematischen Doppelpuls zu Fig. 7,
Figur 9    den Verlauf der optischen Feldstärke des Doppelpulses aus Fig. 8, wobei zur Verdeutlichung die optische Periodendauer nicht-maßstäblich vergrößert dargestellt ist,
Figur 10   eine mögliche Ausführungsform des Pulsformers und Phasenmodulators in Fig. 7,
Figur 11   die Ansteuerung gemäß Fig. 10,
Figur 12   eine weitere mögliche Ausführungsform des Pulsformer und Phasenmodulators in Fig. 7,
Figur 13   eine dritte mögliche Ausführungsform des Pulsformer und Phasenmodulators in Fig. 7,
Figur 14   eine vierte mögliche Ausführungsform des Pulsformer und Phasenmodulators in Fig. 7,
Figur 15   eine fünfte mögliche Ausführungsform des Pulsformer und Phasenmodulators in Fig. 7.

Ausführung der Erfindung

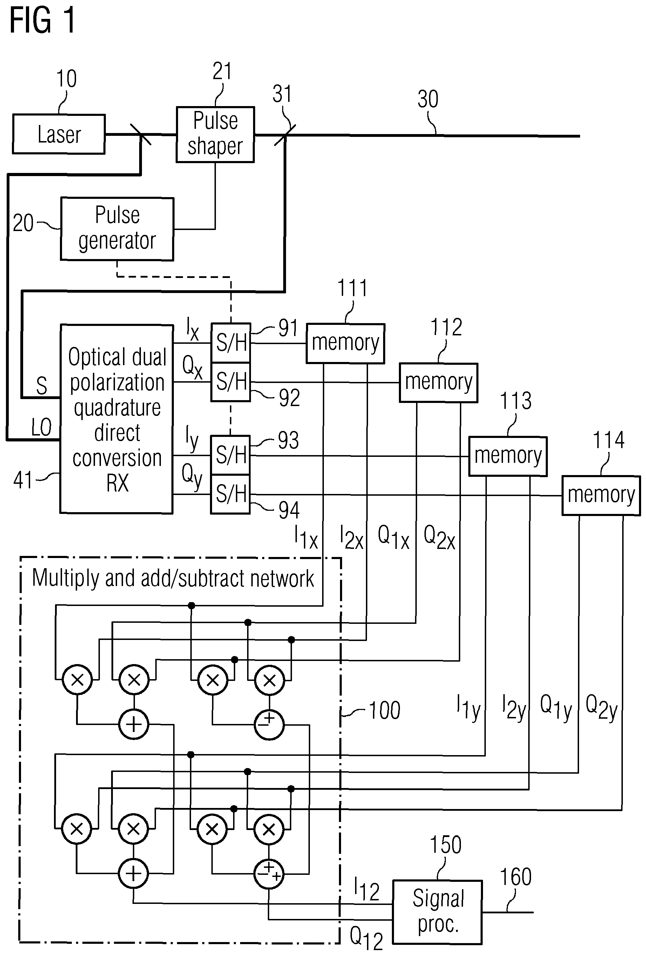

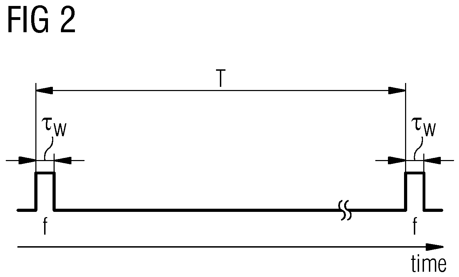

Fig. 1 zeigt einen Laser 10 und einen Pulsformer (pulse shaper) 21, der von einem Pulsgenerator (pulse generator) 20 angesteuert wird. Es wird ein einzelner optischer Puls der Pulsbreite $\tau_w$ erzeugt, der mit der Periode T wiederholt wird. Die Leistung des optischen Lichtpulses, der im sichtbaren oder im Infrarotbereich liegen kann, ist in Fig. 2 in

Abhängigkeit von der Zeit dargestellt. Dieser Lichtpuls wird auf einer optischen Faser 30 gesendet. Auf dieser Faser 30 wird ständig durch Rayleighrückstreuung ein Teil als Lichtecho S reflektiert. Ein richtungsabhängiges Element 31 spaltet das Lichtecho S, also das rückgestreute Licht, vom ursprünglichen Lichtpuls ab. Das Lichtecho S wird in einem optischen Zweipolarisations-Quadratur-Direktempfänger (optical dual polarization quadrature direct conversion RX) 41 mit einem Lokaloszillator LO kombiniert und in elektrische Signale gewandelt. Es sind dies das In-Phase-Signal $I_x$ und das Quadratursignal $Q_x$ einer Polarisationsebene (x-Polarisation) und das In-Phase-Signal $I_y$ und Quadratursignal $Q_y$ der anderen, zur ersten Polarisation orthogonalen Polarisationsebene (y-Polarisation).

In den Sample-und-Hold-Gliedern (S/H) 91 bis 94 werden die vier elektrischen Signale zu mehreren festgelegten Zeiten nach dem vom Pulsgenerator 20 erzeugten Puls abgetastet. Die Werte werden in Speichern 111 bis 114 gespeichert. Die Zeit zwischen dem Absenden des Pulses und dem Abtastzeitpunkt entspricht der Laufzeit des Pulses auf der Faser 30 bis zum Reflexionsort und zurück. Durch den Abtastzeitpunkt ist also der Reflexionsort bestimmt. Nun werden die Signale von zwei Abtastzeitpunkten $\tau_1$ und $\tau_2$ und zwei zugehörigen Reflexionsorten $z_{refl}(\tau_1)$ und $z_{refl}(\tau_2)$ betrachtet. Dies entspricht einem Überwachungsabschnitt.

Vom näheren Ort 1 werden die In-Phase- und Quadratursignalkomponenten in beiden Polarisationsrichtungen $I_{1x}$, $Q_{1x}$, $I_{1y}$ und $Q_{1y}$ empfangen. Vom weiter entfernten Ort 2 werden in derselben Weise die Signale $I_{2x}$, $Q_{2x}$, $I_{2y}$ und $Q_{2y}$ empfangen. Diese Messquadrupel werden einem Phasenvergleich und einer Amplitudenmultiplikation in einem Multiplikations- und Additions/Subtraktions-Netzwerk 100 zugeführt. Daraus wird nach folgenden Gleichungen ein kombiniertes Quadratursignal mit den Komponenten $I_{12}$ und $Q_{12}$ am Ausgang des Additions/Subtraktions-Netzwerk 100 gebildet:

$$I_{12} = \mathrm{Re}\big((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})\big) \qquad \mathrm{Gl.} \ (1)$$

$$Q_{12} = \mathrm{Im}\big((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})\big) \qquad \mathrm{Gl.} \ (2)$$

wobei das kombinierte Quadratursignal dem Realteil und dem Imaginärteil der in Klammern dargestellten Lösung entspricht.

Wenn man aus Komponenten $I_{12}$ und $Q_{12}$ wie in der in den Klammern dargestellten Lösung in der komplexen Zahlenebene darstellt, dann ist das Argument dieser komplexen Zahl proportional zum Schalldruck in der Faser 30 im Überwachungsabschnitt $z_{refl}(\tau_1)$ und $z_{refl}(\tau_2)$. Der Betrag des Vektors entspricht der Signalgüte.

Aus einer Vielzahl von kombinierten Quadratursignalen wird durch eine Signalverarbeitung 150 die akustische Umgebung der Faser 30 rückgewonnen. Dazu werden der Anfangsabtastzeitpunkt $\tau_1$ und der Endabtastzeitpunkt $\tau_2$ variiert und das Echo von mehreren gesendeten Pulsen verwendet. Die ausgewertete Information 160 enthält beispielsweise den Schalldruck an verschiedenen Orten entlang der Glasfaser und in der Umgebung der Glasfaser.

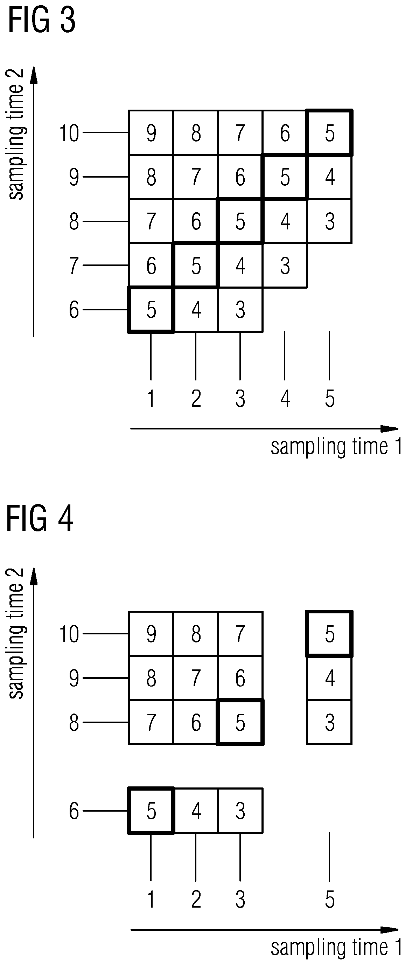

Ein Beispiel für mögliche Kombinationen von Anfangsabtastzeitpunkt und Endabtastzeitpunkt ist in Fig. 3 dargestellt. Der zeitliche Abstand ist in quadratischen Feldern eingetragen und entspricht unterschiedlichen Längen der Überwachungsabschnitte. Auf der Diagonale sind Kombinationen mit gleicher Länge des Überwachungsabschnittes fett eingerahmt dargestellt. Bei diesen ist $\tau_2 - \tau_1$ konstant. Die Gesamtanzahl von möglichen Kombinationen mit unabhängig voneinander gewählten Abtastzeitpunkten ist deutlich größer als von denjenigen mit konstantem Zeitunterschied, obwohl in dem dargestellten Beispiel dieselben, also gleich viele, Originalabtastdatenelemente verwendet werden.

Fig. 4 zeigt an einem Beispiel die Situation, wenn manche Abtastdaten zu kleine Amplitude aufweisen und deshalb unbrauchbar sind. Diese sind - im Vergleich zu Fig. 3 - in Fig. 4 nicht eingezeichnet. Es ist erkennbar, dass eine Vielzahl brauchbarer Daten übrigbleiben. Durch bessere Daten ergibt sich schließlich ein besseres Signal-Rauschverhältnis.

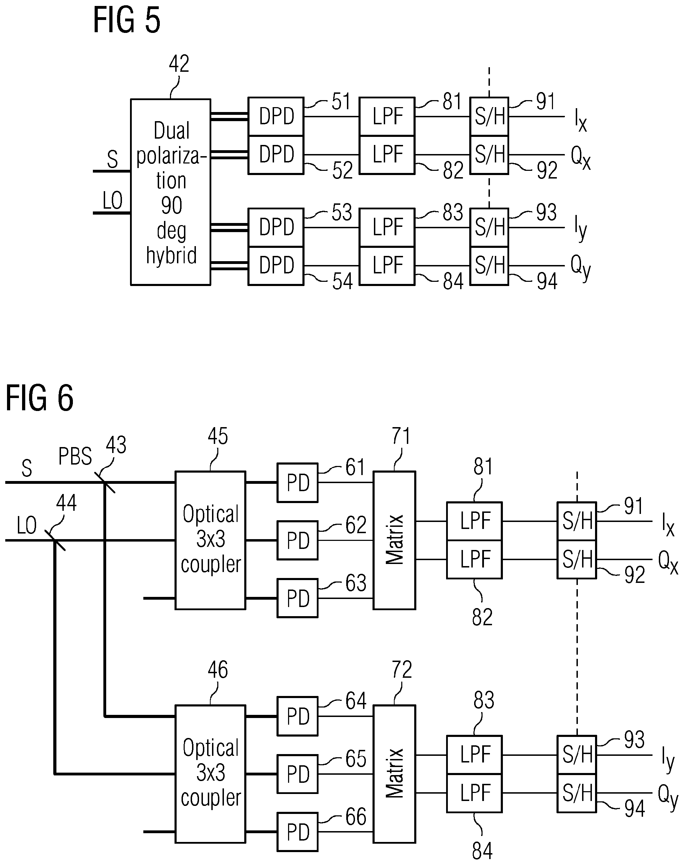

Der optische Empfänger dieses Beispiels kann auf verschiedene Weise ausgeführt werden. In Fig. 5 ist die Verwendung eines kommerziellen optischen Zweipolarisations-90 Grad-Hybrids (dual polarization 90 deg hybrid) 42 gezeigt. Das Hybrid 42 überlagert die x-Polarisation des rückgestreuten Lichtsignals mit dem Lokaloszillator LO mit zusätzlicher Phasenverschiebung von 0 und 180 Grad, was dem ersten Differenz-Photodetektor DPD 51 zugeführt wird. Ebenso wird die x-Polarisation des rückgestreuten Lichtsignals mit dem Lokaloszillator LO mit einer zusätzlichen Phasenverschiebung von 90 und 270 Grad überlagert und einem zweiten Differenz-Photodetektor DPD 52 zugeführt. Dasselbe geschieht sinngemäß auch für die y-Polarisation des rückgestreuten Lichtsignals und dritten und vierten Differenz-Photodetektor (DPD) 53, 54. Dadurch entstehen vier elektrische Signale. Diese werden in den Tiefpassfiltern (LPF) 81 bis 84 bandbegrenzt und in den Sample-und-Hold-Schaltungen (S/H) 91 bis 94 abgetastet. Die Abtastung ist bereits in Fig. 1 dargestellt und wird zu mehreren festgelegten Zeitpunkten, die von einem Pulsgenerator vorgegeben werden, durchgeführt. Die Tiefpassfilter 81-84 führen eine Bandbegrenzung bei etwas mehr als der halben Frequenz durch, die dem kleinsten Abstand zwischen zwei Abtastzeitpunkten entspricht.

Eine weitere Ausführungsvariante benützt einen optischen 3x3-Koppler, wie beispielsweise in Takushima et al., "Measurement of Differential Phasor Diagram of Multilevel DPSK Signals by Using an Adjustment-Free Delay Interferometer Composed of a 3x3 Optical Coupler", IEEE Journal of Lightwave Technology v. 27 n. 6, (2009) pp. 718-730, beschrieben. Diese Ausführungsvariante ist in Fig. 6 dargestellt. Das rückgestreute Licht wird durch einen Polarisationsteiler 43 in x- und y-Polarisation aufgeteilt und zu zwei optischen 3x3-Kopplern 45 und 46 geführt (ein Eingang bleibt unbenutzt). Das Licht des Lasers dient als Lokaloszillator LO und wird über den Koppler 44 aufgeteilt und beiden 3x3-Kopplern 45, 46 zugeführt. An den drei Ausgangsfasern der Koppler 45 und 46 sind Photodetektoren (PD) 61 bis 66 angeschlossen.

Die elektrischen Signale der Photodetektoren (PD) 61 bis 63, die die x-Polarisation des rückgestreuten Lichts auswerten, werden in der Matrix 71 in Komponenten abgebildet, die zum Kosinus und zum Sinus des Phasenunterschiedes zwischen der rückgestreuten Lichtkomponente in x-Polarisation und dem Lokaloszillatorlicht LO proportional sind. Diese sind die In-Phase-Signalkomponente $I_x$ und die Quadratursignalkomponente $Q_x$. Dann folgen - wie in Fig. 5 - wieder die Tiefpassfilter 81 und 82 und Sample-und-Hold-Schaltungen 91 und 92.

Die Matrix 71 lässt sich auch nach den Tiefpassfiltern 81, 82 und auch nach den Sample-und-Hold-Gliedern 91, 92 anordnen, welche dann nötigenfalls dreifach statt zweifach ausgeführt werden.

Eine weitere Ausführungsvariante der Matrix 71 ist die, bei der zusätzlich die Summe der drei Photodetektorsignale gebildet wird, um noch nachträglich eine Symmetriekorrektur des 3x3-Kopplers 45 und der Photodetektoren 61-63 zu ermöglichen.

Ebenso wird die y-Polarisation des rückgestreuten Lichts mittels zweitem optischem 3x3-Koppler 46, Photodetektoren 64-66, Matrix 72, Tiefpassfilter 83, 84 und Sample-und-Hold-Gliedern 93, 94 in eine In-Phase-Signalkomponente $I_y$ und eine Quadratursignalkomponente $Q_y$ gewandelt.

Mit einem zweiten Ausführungsbeispiel erreicht man geringe Kosten aufgrund der Vorverarbeitung auf Senderseite und der Interferenz in der Sensor-Faser, der optischen Faser 30, selbst. Die Besonderheit liegt in der Phasenumtastung der zweiten Hälfte eines Doppelpulses gegenüber der ersten Hälfte. Auf der Empfangsseite wird ein analytisches Signal rückgewonnen. Dadurch erhält man eine Mehrfach-Detektion, die einer Detektion in einem Interferometer mit mehreren Phasenverschiebungen gleichwertig ist. Die Bandbreite reicht nur bis zu einem Viertel der Pulsfrequenz statt bis zur halben Pulsfrequenz, bei doppelter Pulsfrequenz ist die Methode gleichwertig.

Ein besonderer Vorteil der zweiten Methode ist, dass ein Offsetabgleich entfällt, da ein Offset in der Gleichstromsperre bei der Wiederherstellung des analytischen Signals unterdrückt wird. Auch bei dieser Methode ist kein Polarisationsabgleich nötig, da auf der Senderseite nur eine Polarisation auftritt, die in polarisationserhaltenden Fasern geführt werden kann.

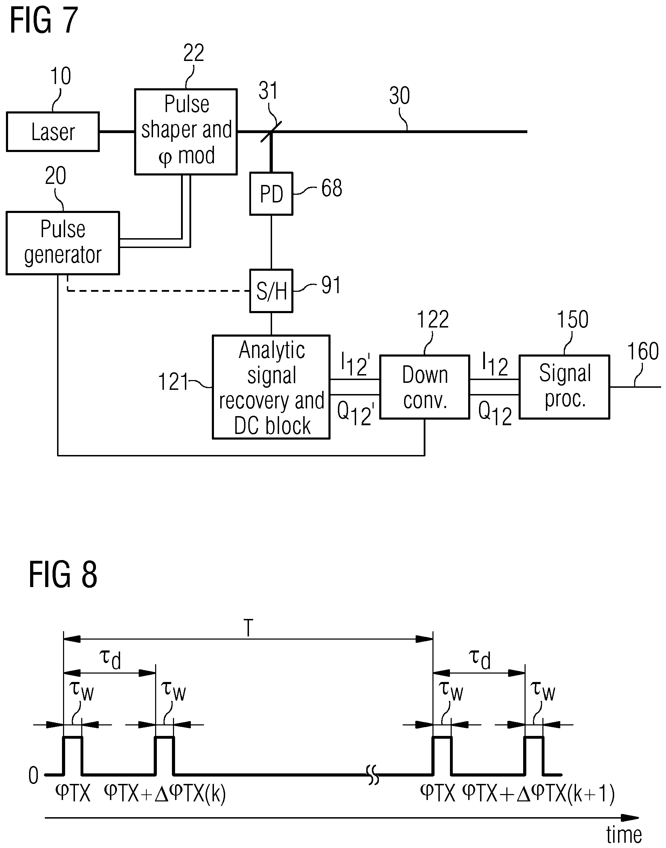

In Fig. 7 ist eine Anordnung zur Ausführung der zweiten Methode umfassend Doppelpulse mit Phasenmodulation dargestellt. Ein Doppelpuls wird aus einem kohärentem Laserstrahl des Lasers 10 mittels eines Pulsformers und Phasenmodulators (pulse shaper and φ mod) 22, der von einem Pulsgenerator (pulse generator) 20 gesteuert wird, erzeugt und in die optische Faser 30 eingebracht. Die beiden Pulse des Doppelpulses unterscheiden sich dadurch, dass ein Puls von beiden phasenmoduliert ist. Geht man davon aus, dass der Doppelpuls mit der Periode T wiederholt wird, so ist die Phasenmodulation von Doppelpuls zu Doppelpuls unterschiedlich. Der Doppelpuls pflanzt sich entlang der Faser 30 fort, der zweite Puls folgt dem ersten Puls in einem räumlichen Abstand. Der Doppelpuls wird laufend durch Rayleighstreuung in der Faser 30 reflektiert. Eine Reflexion des ersten Pulses an einem Ort, der weiter als der halbe räumliche Abstand zwischen den Pulsen vom Ort entfernt ist, an dem der zweite Puls reflektiert wird, überlagert die Reflexion des zweiten Pulses. Auf diese Art wird ein Interferometer gebildet. Eine Vielzahl von Interferometern wird gebildet, indem das rückgestreute Licht nach jedem gesendeten Doppelpuls mehrmals aufgenommen wird. Jedes der Interferometer korrespondiert mit einem bestimmten Abschnitt der Faser 30.

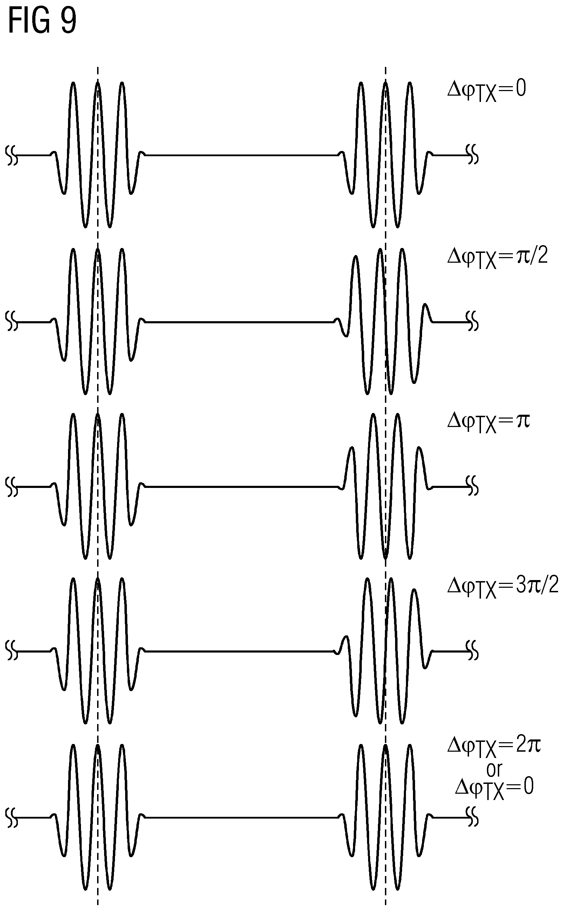

Der vom Pulsformer und Phasenmodulator (pulse shaper and φ mod) 22 erzeugte Doppelpuls, der mit der Periode T wiederholt wird, ist in Fig. 8 dargestellt, die Phasenmodulation ist in Fig. 9 dargestellt, wobei die Pulsform, also die Hüllkurve, konstant bleibt. Der Pulsformer und Phasenmodulator 22 kann durch einen sogenannten optischen QPSK Modulator, einen QAM Modulator oder durch eine Kombination eines Phasenmodulators und eines optoakustischen Modulators realisiert werden. Alternativ kann ein optoakustischer Modulator verwendet werden mit einem elektrischen Steuersignal, das zusätzlich phasenmoduliert ist.

Der Pulsformer und Phasenmodulator 22 erzeugt einen Doppelpuls mit der Dauer $\tau_w$ und dem zeitlichen Abstand $\tau_d$ zwischen den beiden Pulsen des Doppelpulses. Der erste und der zweite Puls werden mit einer relativen Phasenverschiebung $\Delta\varphi_{TX}$ gesendet, die bei jeder Wiederholung des Doppelpulses nach der Periode T verändert wird. Die Phasen der Pulse sind unter den jeweiligen Pulsen in Fig. 8 eingezeichnet.

Fig. 9 zeigt die optische Feldstärke der Pulse aus Fig. 8 schematisch über die Zeit. Zum gleichen Zeitpunkt nach dem Pulsbeginn ist die Phase des optischen Feldes in der ersten Pulshälfte immer gleich, während sie in der zweiten Pulshälfte von Puls zu Puls um $\pi/2$ nach vorne wandert.

In der Faser 30 werden die Pulse durch Rayleighstreuung an statistischen Inhomogenitäten der Faser reflektiert. Reflexionen von Orten, die durch einen Abstand $\dfrac{v_g \cdot \tau_d}{2}$ voneinander getrennt sind, werden sich auf ihrem Rückweg überlagern. $v_g$ ist die Gruppengeschwindigkeit.

Ein richtungsabhängiges Element 31 spaltet das rückgestreute Licht ab. Das richtungsabhängige Element 31 kann als optischer Koppler oder als Zirkulator ausgebildet sein. Die optische Leistung der kombinierten Reflexionen wird im Photodetektor (PD) 68 in ein elektrisches Signal umgewandelt. Ein Sample-und-Hold-Glied (S/H) 91 trennt die reflektierten Signale von verschiedenen diskreten Reflexionsorten in der Faser 30 aufgrund der Ankunftszeit. Der Abschnitt zwischen den Reflexionsorten legt den Überwachungsabschnitt fest.

Durch Variation von $\Delta\varphi_{TX}$, wobei

$$\Delta\varphi_{TX}(k) = k \cdot \frac{\pi}{2} \qquad \text{Gl. (3)}$$

gilt und k der Index ist, der die Pulswiederholungen zählt, wird das auf der Faser 30 gebildete Interferometer von Doppelpuls zu Doppelpuls um 90 Grad verstimmt. Nach vier Pulswiederholungen ist man wieder bei derselben Phase angelangt, da Phasenänderungen von 360 Grad gleichwertig wie keine Phasenänderung sind.

Durch die Periodendauer von 4T kommt es zu einer Frequenzverschiebung um $\dfrac{1}{4 \cdot T}$. Nach dem Shannon'schen Abtasttheorem sind Veränderungen von der Frequenz 0 bis zur halben Abtastfrequenz detektierbar, im gegenständlichen Fall Frequenzen bis zu einer bis zu einem Abstand von $\dfrac{1}{4 \cdot T}$ um die Trägerfrequenz $\dfrac{1}{4 \cdot T}$.

Alternativ kann die Veränderung von $\Delta\varphi_{TX}$ in kleineren oder größeren Schritten gesetzt werden, was aber eine kleinere detektierbare Bandbreite ergibt, da dann entweder die untere Grenze bei der Frequenz 0 oder die obere Grenze bei der halben Abtastfrequenz früher erreicht wird.

Die Abtastwerte von einer genügenden Anzahl von aufeinanderfolgenden Doppelpulsen werden gespeichert. In den folgenden Absätzen bis zur Beschreibung der Signalverarbeitung 150 werden nur diejenigen Abtastwerte betrachtet, die zum selben Überwachungsabschnitt gehören.

Aus diesen zusammengehörenden Abtastwerten wird in einer Einheit 121 zur analytischen Signal-Wiederherstellung mit Gleichstromsperre (analytic signal recovery and DC block) ein analytisches Signal gebildet. Ein analytisches Signal ist in der Signaltheorie ein komplexwertiges Zeitsignal, dessen Imaginärteil die Hilbert-Transformierte des Realteils ist. Die Bezeichnung analytisch drückt aus, dass die Funktion im Komplexen differenzierbar ist.

Es wird in dieser erfindungsgemäßen Ausführungsform auch der Gleichstromanteil eliminiert, der nicht interferierendem Licht und Gleichspannungs- bzw. Gleichstromoffsets entspricht. Bei der Bildung des analytischen Signals beispielsweise durch eine Hilberttransformation handelt es sich bereits um ein zeitdiskretes Filter mit einer bestimmten Blocklänge. Der Gleichstromanteil kann einfach eliminiert werden, indem man von jedem Wert aus dem Datenblock, der zur Bildung des analytischen Signals herangezogen wird, den Mittelwert aller Werte des Datenblocks abzieht.

Das analytische Signal besteht aus dem Realteil $I'_{12}$, der In-Phase-Komponente genannt wird und aus dem Imaginärteil $Q'_{12}$, der Quadraturkomponente genannt wird. Dieses analytische Signal wird in einem Abwärtskonverter (Down conv.) 122 wieder von der Phasendrehung $\Delta\varphi_{TX}$ befreit. Damit entsteht das kombinierte Quadratursignal mit den Komponenten $I_{12}$ und $Q_{12}$:

$$I_{12} = \mathrm{Re}\!\left(\left(I'_{12} + i \cdot Q'_{12}\right)\cdot \exp\!\left(-i \cdot \Delta\varphi_{TX}\right)\right) \qquad \mathrm{Gl.}\ (4)$$

$$Q_{12} = \mathrm{Im}\!\left(\left(I'_{12} + i \cdot Q'_{12}\right)\cdot \exp\!\left(-i \cdot \Delta\varphi_{TX}\right)\right) \qquad \mathrm{Gl.}\ (5)$$

Aus einer Vielzahl von kombinierten Quadratursignalen wird durch Signalverarbeitung (Signal proc.) 150 die akustische Umgebung der Faser rückgewonnen. Die ausgewertete Information 160 enthält beispielsweise den Schalldruck an verschiedenen Orten entlang der Glasfaser und in der Umgebung der Glasfaser.

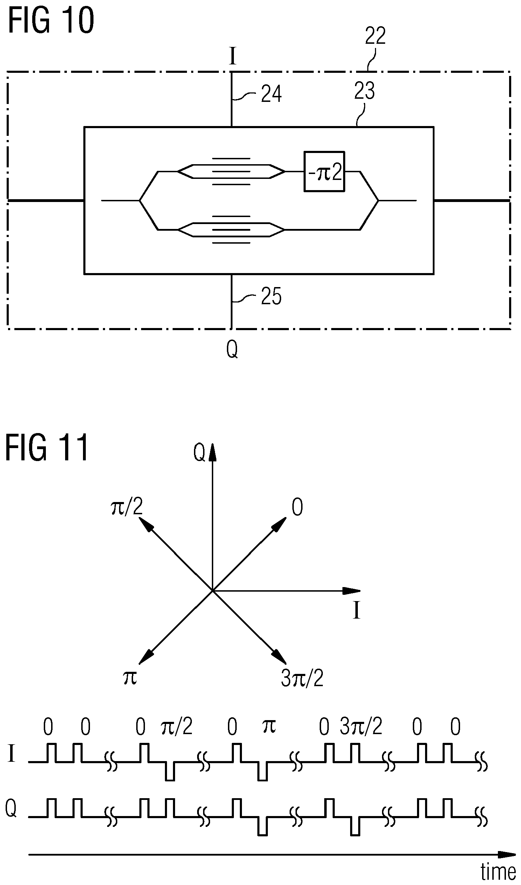

In Fig. 10 ist ein optischer Pulsformer und Phasenmodulator 22 dargestellt, wie er üblicherweise zur Erzeugung von optischem QPSK oder von optischer QAM verwendet wird. Der Modulator 23 ist ein Bauelement, das durch zwei Mach-Zehnder-Modulatoren die optische Signalkomponenten mit einer relativen Phasenverschiebung von π/2 bildet. Der Modulator wird bei einer Vorspannung betrieben, bei der kein Licht durchgelassen wird. Durch Ansteuerung von beiden Mach-Zehnder-Modulatoren mit dem In-Phase-Signal 24 und dem Quadratursignal 25 lassen sich Pulse erzeugen und die optische Phase der Pulse wählen.

Eine solche Ansteuerung ist in Fig. 11 dargestellt. Durch Wahl der Ansteuerspannung am In-Phase-Eingang I und am Quadratureingang Q lassen sich Lichtpulse mit beliebiger Phase bilden. Im oberen Teil des Bildes sind Beispiele von Vektoren dargestellt, die zueinander die Phasenlage 0, π/2, π und 3π/2 haben. Diese Vektoren stellen das erzeugte Licht in Amplitude und Phase dar. Die zeitliche Abfolge der Steuersignale I und Q sind im unteren Teil des Bildes dargestellt. Die erste Hälfte der Doppelpulse hat immer dieselbe Phasenlage, während die zweite Hälfte der Doppelpulse um π/2 zunehmende Phasenlage hat.

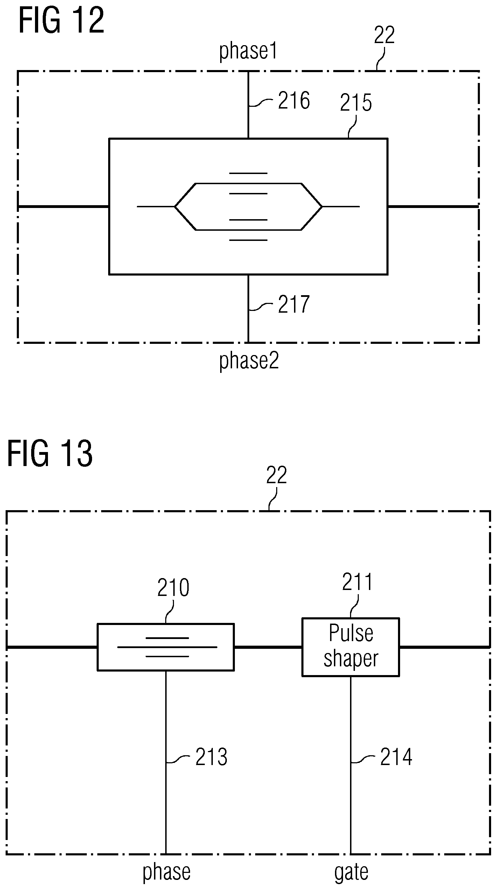

Als Alternative zu Fig. 10 kann ein einziger Mach-Zehnder-Modulator mit zwei Ansteuerungen 215 als Pulsformer und Phasenmodulator 22 verwendet werden. Dies ist in Fig. 12 dargestellt. Durch gegenläufige Pulse in den Ansteuerungen 216 und 217 wird je ein Lichtpuls durchgelassen und durch gleichsinnige Vorspannung der Ansteuerungen 216 und 217 wird die Phase des Lichtpulses verstellt.

Als zweite Alternative zu Fig. 10 kann ein Phasenmodulator 210 und ein Pulsformer 211 verwendet werden. Dies ist in Fig. 13 dargestellt. Mit dem Phasensignal 213 wird die Phase des zweiten Pulses von Doppelpuls zu Doppelpuls um π/2 weitergestellt. Mit dem Gatesignal 214 werden Pulse geformt.

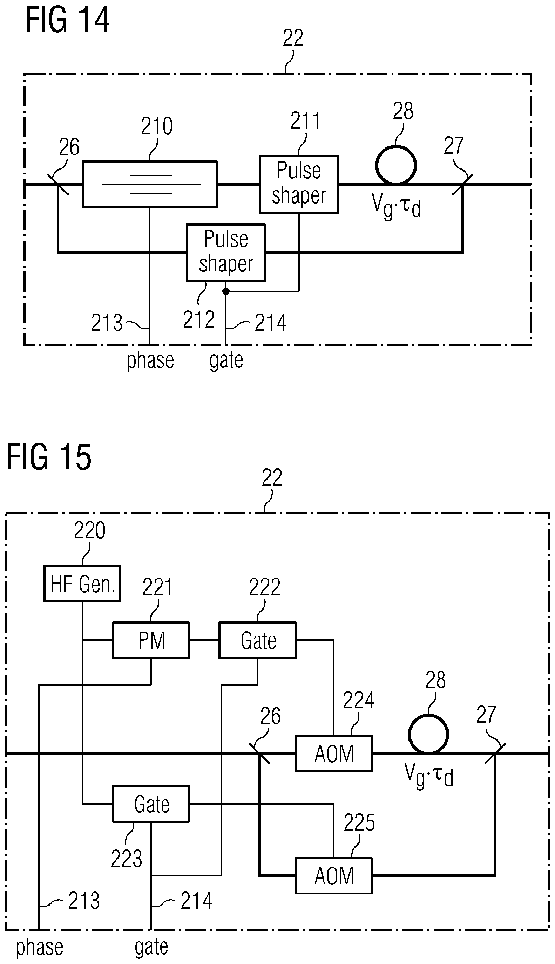

Als weitere Alternative zu Fig. 10, 12 und 13 lässt sich der Pulsformer und Phasenmodulator 22 auch durch eine Anordnung von zwei Zweigen bilden, wie in Fig. 14 darstellt. Das Laserlicht wird durch einen Koppler bzw. Strahlteiler 26 in zwei Zweige geteilt, welche mit einem Koppler 27 wieder zusammengeführt werden. In einem Zweig befindet sich ein Phasenmodulator 210 und eine optische Verzögerungsleitung 28, welche eine Verzögerung von $\tau_d$ bewirkt.

Der erste Teil des Doppelimpulses wird durch Licht gebildet, das den unteren Zweig ohne Phasenmodulation und ohne Verzögerung durchläuft und vom Pulsformer (pulse shaper) 212 gebildet wird, der zweite Teil des Doppelimpulses wird durch das Licht gebildet, das im oberen Zweig den Phasenmodulator 210, den Pulsformer 211 und die Verzögerungsleitung 28 durchläuft. Alternativ kann statt zweier Pulsformer auch ein Pulsformer vor beiden Zweigen verwendet werden. Auch kann auf die Verzögerungsleitung 28 verzichtet werden und der Pulsformer 211 um $\tau_d$ später angesteuert werden.

Der Phasenmodulator 210 wird durch das Phasensignal 213 nach jedem Doppelpuls um $\pi/2$ weitergestellt und das Gatesignal 214 wird vom Pulsgenerator 20 geliefert.

Alternativ zu den Figuren 10 und 12-14 kann die Phasenverschiebung auch mit einem akustooptischen Modulator erzeugt werden, dessen akustischer Wandler von einem Hochfrequenzsignal gespeist wird, das in der Phase beeinflusst wird. Eine derartige Realisierung ist in Fig. 15 dargestellt. Ein Hochfrequenzgenerator (HF Gen.) 220 erzeugt die Frequenz der akustischen Welle. Das Laserlicht wird von einem Koppler bzw. Strahlteiler 26 in zwei Zweige aufgeteilt und in einem Koppler 27 wieder zusammengefügt. Der akustooptische Modulator (AOM) 225 erzeugt den ersten Teil des Doppelimpulses. Dieser wird nur dann durchgelassen, wenn ein Gate 223 die Hochfrequenz für die akustische Welle im akustooptischen Modulator 225 liefert.

Der akustooptische Modulator 224 im oberen Zweig erhält wieder einen Hochfrequenzpuls aus einem Gate, in diesem Fall 222, wobei die elektrische Hochfrequenz in einem elektrischen Hochfrequenzphasenschieber (PM) 221 in der Phase moduliert wird. Dadurch ändert sich auch die optische Phase der zweiten Pulshälfte, die durch die optische Verzögerungsleitung 28 um $\tau_d$ versetzt wird.

Die Phase am Ausgang des Phasenschiebers 221 wird durch das Phasensignal 213 nach jedem Doppelpuls um $\pi/2$ weitergestellt. Das Gatesignal 214 wird vom Pulsgenerator 20 geliefert und steuert die elektrischen Gates 222 und 223 an.

In allen Ausführungsbeispielen des Pulsformers mit Phasenmodulator 22 lässt sich der Pulsabstand der Pulse des gesendeten Doppelpulses $\tau_d$ durch ein getrenntes Gatesignal bzw. durch Doppelpulse im Gatesignal variieren, je nachdem ob sich Pulsformer in zwei Zweigen oder in einem Zweig befinden.

Um das Auslöschungsverhältnis (extinction) zu erhöhen, können mehrere optische Modulatoren so angeordnet werden, dass das Laserlicht sie hintereinander durchläuft.

Bezugszeichenliste:

| 10 | Laser |
|---|---|
| 20 | Pulsgenerator (pulse generator) |
| 21 | optischer Pulsformer (pulse shaper) |
| 22 | optischer Pulsformer und Phasenmodulator (pulse shaper and φ mod) |
| 23 | Mach-Zehnder-Quadraturmodulator |
| 24 | In-Phase-Ansteuersignal des Modulators |
| 25 | Quadratur-Ansteuersignal des Modulators |
| 26 | optischer Koppler |
| 27 | optischer Koppler |
| 28 | optische Verzögerungsleitung |
| 30 | optische Faser (Glasfaser) |
| 31 | richtungsabhängiges Element |
| 41 | optischer Zweipolarisations-Quadratur-Direktempfänger (optical dual polarization quadrature direct conversion RX) |
| 42 | optisches Zweipolarisations-90 Grad-Hybrid (dual polarization 90 deg hybrid) |
| 43 | Polarisationsteiler (PBS) |
| 44 | Koppler |
| 45 | erster optischer 3x3-Koppler |
| 46 | zweiter optischer 3x3-Koppler |
| 51 | erster Differenz-Photodetektor (DPD) |
| 52 | zweiter Differenz-Photodetektor (DPD) |
| 53 | dritter Differenz-Photodetektor (DPD) |
| 54 | vierter Differenz-Photodetektor (DPD) |
| 61-66 | Photodetektor |

| 68 | Photodetektor |
|---|---|
| 71 | Matrix |
| 81-84 | Tiefpassfilter (LPF) |
| 91-94 | Sample-und-Hold-Glieder (S/H) |
| 100 | Multiplikations- und Additions/Subtraktions-Netzwerk |
| 111-114 | Speicher |
| 121 | Einheit zur analytischen Signal-Wiederherstellung mit Gleichstromsperre (analytic signal recovery and DC block) |
| 122 | Abwärtskonverter (Down conv.) |
| 150 | Signalverarbeitung (Signal proc.) |
| 160 | ausgewertete Information, Schalldruck an mehreren Orten |
| 210 | optischer Phasenmodulator |
| 211 | optischer Pulsformer (pulse shaper) |
| 212 | optischer Pulsformer (pulse shaper) |
| 213 | Phasensignal |
| 214 | Gatesignal |
| 215 | Mach-Zehnder-Modulator mit zwei Ansteuerungen (dual drive Mach-Zehnder modulator) |
| 216 | erstes Ansteuersignal von 215 |
| 217 | zweites Ansteuersignal von 215 |
| 220 | Hochfrequenzgenerator (HF Gen.) |
| 221 | elektrischer Hochfrequenzphasenschieber (PM) |
| 222 | erstes Gate |
| 223 | zweites Gate |
| 224 | akustooptischer Modulator (AOM) |
| 225 | akustooptischer Modulator (AOM) |
| $I_x$ | In-Phase-Signal der Polarisationsebene x |
| $I_y$ | In-Phase-Signal der Polarisationsebene y |
| $I_{12}$ | In-Phase-Komponente des kombinierten Quadratursignals |
| $I'_{12}$ | In-Phase-Komponente des rotierenden kombinierten Quadratursignals |
| LO | Lokaloszillator |
| $Q_x$ | Quadratursignal der Polarisationsebene x |
| $Q_y$ | Quadratursignal der Polarisationsebene y |
| $Q_{12}$ | Quadraturkomponente des kombinierten Quadratursignals |
| $Q'_{12}$ | Quadraturkomponente des rotierenden kombinierten Quadratursignals |
| S | Lichtecho (rückgestreutes Lichtsignal) |
| $\tau_1$ | erster Abtastzeitpunkt |
| $\tau_2$ | zweiter Abtastzeitpunkt |
| $\tau_w$ | Pulsbreite des optischen Pulses |
| $\tau_d$ | Pulsabstand der Pulse des optischen Doppelpulses |
| $T(\tau_1)$ | Periode des optischen Pulses |
| $z_{refl}(\tau_2)$ | erster Reflexionsort |
| $z_{refl}$ | zweiter Reflexionsort |
| $\Delta\varphi_{TX}$ | Phasenunterschied zwischen dem ersten und dem zweiten Puls des Doppelpulses |

**Patentansprüche**

1. Verfahren zur Messung der akustischen Umgebung einer Glasfaser durch Messung der optischen Pfadlänge der Glasfaser (30) durch Einleitung eines Lichtsignals und durch Auswertung des in der Glasfaser rückgestreuten Lichtsignals, **dadurch gekennzeichnet, dass** aus dem rückgestreuten Lichtsignal für unterschiedliche Überwachungsabschnitte jeweils gemäß

$$I_{12} = \mathrm{Re}\big((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})\big)$$

und

$$Q_{12} = \text{Im}\left(\left(I_{1x} + i \cdot Q_{1x}\right) \cdot \left(I_{2x} - i \cdot Q_{2x}\right) + \left(I_{1y} + i \cdot Q_{1y}\right) \cdot \left(I_{2y} - i \cdot Q_{2y}\right)\right)$$

ein kombiniertes Quadratursignal (I12, Q12) gebildet wird,

mit $I_{1x}$, $Q_{1x}$: In-Phase bzw. Quadratursignalkomponente eines an einem näheren Ort rückgestreuten Signals in einer x-Polarisationsrichtung,

$I_{2x}$, $Q_{2x}$: In-Phase bzw. Quadratursignalkomponente eines an einem weiter entfernten Ort rückgestreuten Signals in der x-Polarisationsrichtung,

$I_{1y}$, $Q_{1y}$: In-Phase bzw. Quadratursignalkomponente eines an dem näheren Ort rückgestreuten Signals in einer y-Polarisationsrichtung, und

$I_{2y}$, $Q_{2y}$: In-Phase bzw. Quadratursignalkomponente eines an dem weiter entfernten Ort rückgestreuten Signals in der y-Polarisationsrichtung,

wobei die Phase des kombinierten Quadratursignals ($I_{12}$, $Q_{12}$) als Maß für den Schalldruck und die Amplitude als Maß für die Signalgüte dient.

2. Verfahren nach Anspruch 1, **dadurch gekennzeichnet,**

- **dass** das Lichtsignal von einem Laser (10) erzeugt wird,
- **dass** ein Teil dieses Laserlichts als Lokaloszillator (LO) zur kohärenten Demodulation und Bandbegrenzung des rückgestreuten Lichtsignals verwendet wird und
- **dass** die Komponenten ($I_{12}$, $Q_{12}$) der kombinierten Quadratursignale numerisch gebildet werden.

3. Verfahren nach Anspruch 2, **dadurch gekennzeichnet,**

- **dass** das Lichtsignal ein periodischer Lichtpuls ist,
- **dass** für beide Polarisationen des rückgestreuten Lichtsignals jeweils ein Quadratursignal mit jeweils einer In-Phase-Komponente ($I_x$, $I_y$) und einer Quadraturkomponente ($Q_x$, $Q_y$) gebildet wird,
- **dass** diese zu mehreren festgelegten Abtastzeitpunkten abgetastet und gespeichert werden, wobei jeweils zwei Abtastzeitpunkte einem Überwachungsabschnitt der Glasfaser entsprechen,
- **dass** für jede Polarisation durch Vergleich der Phasen der beiden Quadratursignale jedes Überwachungsabschnittes und durch Multiplikation der Amplituden der beiden Quadratursignale numerisch die Komponenten eines vorläufigen kombinierten Quadratursignals jeweils einer Polarisation gebildet werden,
- **dass** die vorläufigen kombinierten Quadratursignale jeder Polarisation addiert werden und ein kombiniertes Quadratursignal ($I_{12}$, $Q_{12}$) bilden und
- **dass** aus einer Vielzahl von kombinierten Quadratursignalen die akustische Umgebung der Glasfaser (30) rekonstruiert wird.

4. Verfahren nach Anspruch 3, **dadurch gekennzeichnet, dass** das Lichtsignal mittels eines Lasers (10) erzeugt wird, in einem Pulsformer (21) daraus der periodische Lichtpuls erzeugt und in die Glasfaser (30) geleitet wird, wobei das rückgestreute Lichtsignal aus der Glasfaser ausgekoppelt und einem optischen Zweipolarisations-Quadratur-Direktempfänger (41) zugeleitet wird, die darin erzeugten In-Phase-Signale und Quadratursignale gespeichert und einem Multiplikations- und Additions/Subtraktions-Netzwerk (100) zur Bildung der Komponenten des kombinierten Quadratursignals ($I_{12}$, $Q_{12}$) zugeführt werden.

5. Verfahren nach Anspruch 4, **dadurch gekennzeichnet, dass** der Zweipolarisations-Quadratur-Direktempfänger (41) ein optisches Zweipolarisations-90-Grad-Hybrid (42) aufweist, dessen Ausgänge über Differenz-Photodetektoren (51-54) und Tiefpassfilter (81-84) geführt werden.

6. Verfahren nach Anspruch 4, **dadurch gekennzeichnet, dass** der Zweipolarisations-Quadratur-Direktempfänger (41) nach einem eingangsseitigen Polarisationsteiler (43) zwei optische 3x3-Koppler (45, 46) enthält, deren Ausgänge über Photodetektoren (61-66), Matrizen (71, 72) und Tiefpassfilter (61-66) geführt werden.

7. Verfahren nach einem der Ansprüche 2 bis 6, **dadurch gekennzeichnet, dass** kombinierte Quadratursignale ($I_{12}$, $Q_{12}$) von Überwachungsabschnitten mit mehreren unterschiedlichen Längen gebildet werden.

8. Verfahren nach Anspruch 1, **dadurch gekennzeichnet,**

- **dass** das Lichtsignal ein periodischer Doppelpuls ist, der jeweils aus zwei Pulsen besteht,
- **dass** einer der Pulse relativ zum anderen phasenmoduliert ist,
- **dass** die Leistung des rückgestreuten Lichtsignals, das eine Überlagerung von beiden Pulsen enthält, zu mehreren festgelegten Abtastzeitpunkten ($\tau_1, \tau_2$) abgetastet und gespeichert wird, wobei jeder Abtastzeitpunkt einem Überwachungsabschnitt der Glasfaser (30) entspricht,
- **dass** ein kombiniertes Quadratursignal (I$_{12}$, Q$_{12}$) gebildet wird und
- **dass** aus einer Vielzahl von kombinierten Quadratursignalen die akustische Umgebung der Glasfaser (30) rekonstruiert wird.

9. Verfahren nach Anspruch 8, **dadurch gekennzeichnet, dass** das Lichtsignal mittels eines Lasers (10) erzeugt wird, in einem optischen Pulsformer mit Phasenmodulator (22) daraus der periodische Doppelpuls erzeugt und in die Glasfaser (30) geleitet wird, wobei das rückgestreute Lichtsignal aus der Glasfaser ausgekoppelt und über einen Photodetektor (68) einer Speicherung zugeleitet wird, aus welcher mittels analytischer-Signal-Wiederherstellung mit Gleichstromsperre und Abwärtskonverter (121)

gemäß

$$I_{12} = \mathrm{Re}\left(\left(I_{1x} + i \cdot Q_{1x}\right) \cdot \left(I_{2x} - i \cdot Q_{2x}\right) + \left(I_{1y} + i \cdot Q_{1y}\right) \cdot \left(I_{2y} - i \cdot Q_{2y}\right)\right)$$

und

$$Q_{12} = \mathrm{Im}\left(\left(I_{1x} + i \cdot Q_{1x}\right) \cdot \left(I_{2x} - i \cdot Q_{2x}\right) + \left(I_{1y} + i \cdot Q_{1y}\right) \cdot \left(I_{2y} - i \cdot Q_{2y}\right)\right)$$

die Komponenten des kombinierten Quadratursignals (I$_{12}$, Q12) erzeugt werden.

10. Verfahren nach Anspruch 9, **dadurch gekennzeichnet, dass** der optische Pulsformer mit Phasenmodulator (22) zwei angesteuerte Mach-Zehnder-Modulatoren enthält.

11. Verfahren nach Anspruch 9, **dadurch gekennzeichnet, dass** der optische Pulsformer mit Phasenmodulator (22) einen Mach-Zehnder-Modulator mit zwei Ansteuerungen enthält.

12. Verfahren nach Anspruch 9, **dadurch gekennzeichnet, dass** der optische Pulsformer mit Phasenmodulator (22) einen optischen Phasenmodulator (210) und mindestens einen optischen Pulsformer (211, 212) enthält.

13. Verfahren nach Anspruch 9, **dadurch gekennzeichnet,**

- **dass** der optische Pulsformer mit Phasenmodulator (22) einen Hochfrequenzgenerator (220) enthält,
- **dass** dessen Phase moduliert wird und
- **dass** der optische Pulsformer mit Phasenmodulator mindestens einen akustooptischen Modulator (224, 225) enthält.

14. Vorrichtung zur Durchführung des Verfahrens nach einem der Ansprüche 1 bis 13, **dadurch gekennzeichnet,**

- **dass** zumindest ein richtungsabhängiges Element (31) vorgesehen ist, mit welchem ein rückgestreutes Lichtsignal aus der Glasfaser (30) auskoppelbar ist, und
- **dass** zumindest eine Verarbeitungseinheit (41, 100; 121, 122) für das rückgestreute Lichtsignal vorgesehen ist, welche zur Bildung des kombinierten Quadratursignals (I$_{12}$, Q$_{12}$) gemäß

$$I_{12} = \mathrm{Re}\left(\left(I_{1x} + i \cdot Q_{1x}\right) \cdot \left(I_{2x} - i \cdot Q_{2x}\right) + \left(I_{1y} + i \cdot Q_{1y}\right) \cdot \left(I_{2y} - i \cdot Q_{2y}\right)\right)$$

und

$$Q_{12} = \mathrm{Im}\left(\left(I_{1x} + i \cdot Q_{1x}\right) \cdot \left(I_{2x} - i \cdot Q_{2x}\right) + \left(I_{1y} + i \cdot Q_{1y}\right) \cdot \left(I_{2y} - i \cdot Q_{2y}\right)\right)$$

mit $I_{1x}$, $Q_{1x}$ : In-Phase bzw. Quadratursignalkomponente eines an einem näheren Ort rückgestreuten Signals in einer x-Polarisationsrichtung,

$I_{2x}$, $Q_{2x}$ : In-Phase bzw. Quadratursignalkomponente eines an einem weiter entfernten Ort rückgestreuten Signals in der x-Polarisationsrichtung,

$I_{1y}$, $Q_{1y}$ : In-Phase bzw. Quadratursignalkomponente eines an dem näheren Ort rückgestreuten Signals in einer y-Polarisationsrichtung, und

$I_{2y}$, $Q_{2y}$ : In-Phase bzw. Quadratursignalkomponente eines an dem weiter entfernten Ort rückgestreuten Signals in der y-Polarisationsrichtung,

ausgebildet ist.

15. Vorrichtung nach Anspruch 14, **dadurch gekennzeichnet,**

- **dass** ein Laser (10) zum Erzeugen des Lichtsignals vorgesehen ist,
- **dass** der Laser (10) mit einer Verarbeitungseinheit (41) verbunden ist, sodass ein Teil dieses Laserlichts als Lokaloszillator (LO) zur kohärenten Demodulation und Bandbegrenzung des rückgestreuten Lichtsignals verwendet werden kann und
- **dass** in einer weiteren Verarbeitungseinheit (100) die Komponenten ($I_{12}$, $Q_{12}$) der kombinierten Quadratursignale numerisch gebildet werden können.

16. Vorrichtung nach Anspruch 15, **dadurch gekennzeichnet,**

- **dass** ein optischer Zweipolarisations-Quadratur-Direktempfänger (41) vorgesehen ist, mit welchem aus dem rückgestreuten Lichtsignal In-Phase-Signale und Quadratursignale erzeugt werden können,
- **dass** dieser mit einem Multiplikations- und Additions/Subtraktions-Netzwerk (100) zur Bildung der Komponenten des kombinierten Quadratursignals ($I_{12}$, $Q_{12}$) verbunden ist.

17. Vorrichtung nach Anspruch 16, **dadurch gekennzeichnet, dass** der Zweipolarisations-Quadratur-Direktempfänger (41) ein optisches Zweipolarisations-90-Grad-Hybrid (42) aufweist, dessen Ausgänge über Differenz-Photodetektoren (51-54) und Tiefpassfilter (81-84) geführt sind.

18. Vorrichtung nach Anspruch 16, **dadurch gekennzeichnet, dass** der Zweipolarisations-Quadratur-Direktempfänger (41) nach einem eingangsseitigen Polarisationsteiler (43) zwei optische 3x3-Koppler (45, 46) enthält, deren Ausgänge über Photodetektoren (61-66), Matrizen (71, 72) und Tiefpassfilter (61-66) geführt sind.

19. Vorrichtung nach Anspruch 14, **dadurch gekennzeichnet,**

- **dass** ein Laser (10) zum Erzeugen des Lichtsignals vorgesehen ist,
- **dass** dem Laser (10) ein optischer Pulsformer mit Phasenmodulator (22) zur Erzeugung eines periodischen Doppelpulses nachgeschaltet ist, wobei der optische Pulsformer mit Phasenmodulator mit der Glasfaser (30) verbunden ist,
- **dass** das richtungsabhängige Element (31) über einen Photodetektor (68) mit einer analytischen-Signal-Wiederherstellung mit Gleichstromsperre und Abwärtskonverter (121) verbunden ist, mit welcher die Komponenten des kombinierten Quadratursignals ($I_{12}$, $Q_{12}$) erzeugt werden können.

20. Vorrichtung nach Anspruch 19, **dadurch gekennzeichnet, dass** der optische Pulsformer mit Phasenmodulator (22) zwei angesteuerte Mach-Zehnder-Modulatoren enthält.

21. Vorrichtung nach Anspruch 19, **dadurch gekennzeichnet, dass** der optische Pulsformer mit Phasenmodulator (22) einen Mach-Zehnder-Modulator mit zwei Ansteuerungen enthält.

22. Vorrichtung nach Anspruch 19, **dadurch gekennzeichnet, dass** der optische Pulsformer mit Phasenmodulator (22) einen optischen Phasenmodulator (210) und mindestens einen optischen Pulsformer (211, 212) enthält.

23. Vorrichtung nach Anspruch 19, **dadurch gekennzeichnet,**

- **dass** der optische Pulsformer mit Phasenmodulator (22) einen Hochfrequenzgenerator (220) enthält,
- **dass** ein Phasenmodulator (221) vorgesehen ist, mit welchem die Phase des Hochfrequenzgenerators (220) moduliert werden kann, und

- **dass** der optische Pulsformer mit Phasenmodulator weiters mindestens einen akustooptischen Modulator (224, 225) enthält.

**Claims**

1. Method for measuring the acoustic environment of a glass fibre by measuring the optical path length of the glass fibre (30) by introducing a light signal and by evaluating the light signal which is backscattered in the glass fibre, **characterised in that** a combined quadrature signal (112, Q12) is formed from the backscattered light signal for different monitoring sections, in each case according to

$$I_{12} = Re\left((I_{1x} + Q_{1x}) \cdot (I_{2x} - i \cdot Q_{2x}) + (I_{1y} + i \cdot Q_{1y}) \cdot (I_{2y} - i \cdot Q_{2y})\right)$$

and

$$Q_{12} = Im\left((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})\right),$$

where $I_{1x}$, $Q_{1x}$ : in-phase or quadrature signal component of a signal backscattered at a closer location in an x-polarisation direction,
$I_{2x}$, $Q_{2x}$ : in-phase or quadrature signal component of a signal backscattered at a location which is further away in the x-polarisation direction,
$I_{1y}$, $Q_{1y}$ : in-phase or quadrature signal component of a signal backscattered at the closer location in a y-polarisation direction, and
$I_{2y}$, $Q_{2y}$ : in-phase or quadrature signal component of a signal backscattered at the location which is further away in the y-polarisation direction,
wherein the phase of the combined quadrature signal ($I_{12}$, $Q_{12}$) acts as a measure for the sound pressure and the amplitude as a measure for the signal quality.

2. Method according to claim 1, **characterised in that**

   - the light signal is generated by a laser (10),
   - a part of said laser light is used as a local oscillator (LO) for the coherent demodulation and band limiting of the backscattered light signal and
   - the components ($I_{12}$, $Q_{12}$) of the combined quadrature signals are formed numerically.

3. Method according to claim 2, **characterised in that**

   - the light signal is a periodic light pulse,
   - for both polarisations of the backscattered light signal, one quadrature signal is formed in each case with one in-phase component ($I_x$, $I_y$) and one quadrature component ($Q_x$, $Q_y$) in each case,
   - these are sampled and saved at a plurality of stipulated sampling times, wherein two sampling times correspond to a monitoring section of the glass fibre in each case,
   - for each polarisation, by comparing the phases of the two quadrature signals of each monitoring section and by multiplying the amplitudes of the two quadrature signals, the components of a preliminary combined quadrature signal of one polarisation in each case are formed numerically,
   - the preliminary combined quadrature signals of each polarisation are added and form a combined quadrature signal ($I_{12}$, $Q_{12}$) and
   - the acoustic environment of the glass fibre (30) is reconstructed from a multitude of combined quadrature signals.

4. Method according to claim 3, **characterised in that** the light signal is generated by means of a laser (10), the periodic light pulse is generated therefrom in a pulse shaper (21) and conducted into the glass fibre (30), wherein the backscattered light signal is decoupled from the glass fibre and supplied to an optical bipolarisation quadrature direct receiver (41), the in-phase signals and quadrature signal generated therein are saved and supplied to a multiplication and addition/subtraction network (100) to form the components of the combined quadrature signal

($I_{12}$, $Q_{12}$).

5. Method according to claim 4, **characterised in that** the bipolarisation quadrature direct receiver (41) has an optical bipolarisation 90-degree hybrid (42), the outputs of which are guided via differential photodetectors (51-54) and low-pass filters (81-84).

6. Method according to claim 4, **characterised in that** the bipolarisation quadrature direct receiver (41) contains, after an input-side polarisation splitter (43), two optical 3x3 couplers (45, 46), the outputs of which are guided via photodetectors (61-66), matrices (71, 72) and low-pass filters (61-66).

7. Method according to one of claims 2 to 6, **characterised in that** combined quadrature signals ($I_{12}$, $Q_{12}$) are formed by monitoring sections with a plurality of different lengths.

8. Method according to claim 1, **characterised in that**

   - the light signal is a periodic double pulse, which consists of two pulses in each case,
   - one of the pulses is phase-modulated relative to the other,
   - the power of the backscattered light signal, which contains a superimposition of both pulses, is sampled and saved at a plurality of stipulated sampling times ($\tau_1$, $\tau_2$), wherein each sampling time corresponds to a monitoring section of the glass fibre (30),
   - a combined quadrature signal ($I_{12}$, $Q_{12}$) is formed and
   - the acoustic environment of the glass fibre (30) is reconstructed from a multitude of combined quadrature signals.

9. Method according to claim 8, **characterised in that** the light signal is generated by means of a laser (10), the periodic double pulse is generated therefrom in an optical pulse shaper and conducted into the glass fibre (30), wherein the backscattered light signal is decoupled from the glass fibre and supplied to a memory via a photodetector (68), from which, by means of analytical signal restoration using DC barrier and step-down converter (121), the components of the combined quadrature signal ($I_{12}$, $Q_{12}$) are generated according to

$$I_{12} = Re\left( (I_{1x} + Q_{1x}) \cdot (I_{2x} - i \cdot Q_{2x}) + (I_{1y} + i \cdot Q_{1y}) \cdot (I_{2y} - i \cdot Q_{2y}) \right)$$

and

$$Q_{12} = Im\left( (I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y}) \right).$$

10. Method according to claim 9, **characterised in that** the optical pulse shaper with phase modulator (22) contains two actuated Mach-Zehnder modulators.

11. Method according to claim 9, **characterised in that** the optical pulse shaper with phase modulator (22) contains one Mach-Zehnder modulator with two actuations.

12. Method according to claim 9, **characterised in that** the optical pulse shaper with phase modulator (22) contains an optical phase modulator (210) and at least one optical pulse shaper (211, 212).

13. Method according to claim 9, **characterised in that**

   - the optical pulse shaper with phase modulator (22) contains a high-frequency generator (220),
   - the phase thereof is modulated and
   - the optical pulse shaper with phase modulator contains at least one acousto-optical modulator (224, 225).

14. Apparatus for performing the method according to one of claims 1 to 13, **characterised in that**

   - at least one direction-dependent element (31) is provided, with which a backscattered light signal is able to be decoupled from the glass fibre (30) and
- at least one processing unit (41, 100; 121, 122) for the backscattered light signal is provided, which is embodied to form the combined quadrature signal ($I_{12}$, $Q_{12}$) according to

$$I_{12} = Re\left(\left(I_{1x} + Q_{1x}\right) \cdot \left(I_{2x} - i \cdot Q_{2x}\right) + \left(I_{1y} + i \cdot Q_{1y}\right) \cdot \left(I_{2y} - i \cdot Q_{2y}\right)\right)$$

and

$$Q_{12} = Im\left(\left(I_{1x} + i \cdot Q_{1x}\right) \cdot \left(I_{2x} - i \cdot Q_{2x}\right) + \left(I_{1y} + i \cdot Q_{1y}\right) \cdot \left(I_{2y} - i \cdot Q_{2y}\right)\right)$$

where $I_{1x}$, $Q_{1x}$ : in-phase or quadrature signal component of a signal backscattered at a closer location in an x-polarisation direction,
$I_{2x}$, $Q_{2x}$ : in-phase or quadrature signal component of a signal backscattered at a location which is further away in the x-polarisation direction,
$I_{1y}$, $Q_{1y}$ : in-phase or quadrature signal component of a signal backscattered at the closer location in a y-polarisation direction, and
$I_{2y}$, $Q_{2y}$ : in-phase or quadrature signal component of a signal backscattered at the location which is further away in the y-polarisation direction.

15. Apparatus according to claim 14, **characterised in that**

- a laser (10) for generating the light signal is provided,
- the laser (10) is connected to a processing unit (41), so that a part of said laser light can be used as a local oscillator (LO) for the coherent demodulation and band limiting of the backscattered light signal and
- in a further processing unit (100) the components ($I_{12}$, $Q_{12}$) of the combined quadrature signals can be formed numerically.

16. Apparatus according to claim 15, **characterised in that**

- an optical bipolarisation quadrature direct receiver (41) is provided, with which in-phase signals and quadrature signals can be generated from the backscattered light signal,
- this is connected to a multiplication and addition/subtraction network (100) to form the components of the combined quadrature signal ($I_{12}$, $Q_{12}$) .

17. Apparatus according to claim 16, **characterised in that** the bipolarisation quadrature direct receiver (41) has an optical bipolarisation 90-degree hybrid (42), the outputs of which are guided via differential photodetectors (51-54) and low-pass filters (81-84).

18. Apparatus according to claim 16, **characterised in that** the bipolarisation quadrature direct receiver (41) contains, after an input-side polarisation splitter (43), two optical 3x3 couplers (45, 46), the outputs of which are guided via photodetectors (61-66), matrices (71, 72) and low-pass filters (61-66).

19. Apparatus according to claim 14, **characterised in that**

- a laser (10) for generating the light signal is provided,
- an optical pulse shaper with phase modulator (22) is connected downstream of the laser (10) to generate a periodic double pulse, wherein the optical pulse shaper with phase modulator is connected to the glass fibre (30),
- the direction-dependent element (31) is connected via a photodetector (68) to an analytical signal restoration with DC barrier and step-down converter (121), with which the components of the combined quadrature signal ($I_{12}$, $Q_{12}$) can be generated.

20. Apparatus according to claim 19, **characterised in that** the optical pulse shaper with phase modulator (22) contains two actuated Mach-Zehnder modulators.

21. Apparatus according to claim 19, **characterised in that** the optical pulse shaper with phase modulator (22) contains one Mach-Zehnder modulator with two actuations.

**22.** Apparatus according to claim 19, **characterised in that** the optical pulse shaper with phase modulator (22) contains an optical phase modulator (210) and at least one optical pulse shaper (211, 212).

**23.** Apparatus according to claim 19, **characterised in that**

- the optical pulse shaper with phase modulator (22) contains a high-frequency generator (220),
- a phase modulator (221) is provided, with which the phase of the high-frequency generator (220) can be modulated, and
- the optical pulse shaper with phase modulator further contains at least one acousto-optical modulator (224, 225) .

**Revendications**

**1.** Procédé de mesure de l'environnement acoustique d'une fibre de verre par une mesure de la longueur du chemin optique de la fibre de verre (30) en introduisant un signal lumineux et en évaluant le signal lumineux rétrodiffusé dans la fibre de verre,
**caractérisé en ce qu'**à partir du signal lumineux rétrodiffusé pour différents segments surveillés, un signal de quadrature ($I_{12}$, $Q_{12}$) combiné est formé, respectivement selon les formules suivantes :

$$I_{12} = \mathrm{Re}((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})),$$

et

$$Q_{12} = \mathrm{Im}((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})),$$

dans lesquelles

$I_{1x}$ et $Q_{1x}$ représentent respectivement une composante de signal en phase et en quadrature d'un signal rétrodiffusé à un endroit plus proche dans une direction de polarisation x,
$I_{2x}$ et $Q_{2x}$ représentent respectivement une composante de signal en phase et en quadrature d'un signal rétrodiffusé à un endroit plus éloigné dans la direction de polarisation x,
$I_{1y}$ et $Q_{1y}$ représentent respectivement une composante de signal en phase et en quadrature d'un signal rétrodiffusé à l'endroit plus proche dans une direction de polarisation y, et
$I_{2y}$ et $Q_{2y}$ représentent respectivement une composante de signal en phase et en quadrature d'un signal rétrodiffusé à l'endroit plus éloigné dans la direction de polarisation y,
dans lequel la phase du signal de quadrature combiné ($I_{12}$, $Q_{12}$) sert de mesure pour la pression acoustique et l'amplitude sert de mesure pour la qualité du signal.

**2.** Procédé selon la revendication 1, **caractérisé en ce que** :

- le signal lumineux est produit par un laser (10),
- une partie de cette lumière de laser est utilisée en tant qu'oscillateur local (Lo) pour une démodulation cohérente et une limitation de bande du signal lumineux rétrodiffusé, et
- les composantes ($I_{12}$, $Q_{12}$) des signaux de quadrature combinés sont formées numériquement.

**3.** Procédé selon la revendication 2, **caractérisé en ce que** :

- le signal lumineux est une impulsion de lumière périodique,
- pour les deux polarisations du signal lumineux rétrodiffusé, à chaque fois un signal de quadrature comportant respectivement une composante en phase ($I_x$, $I_y$) et une composante en quadrature ($Q_x$, $Q_y$) est formé,
- ces signaux sont échantillonnés et enregistrés à plusieurs instants d'échantillonnage déterminés, dans lequel à chaque fois deux instants d'échantillonnage correspondent à un segment surveillé de la fibre de verre,

- les composantes d'un signal de quadrature combiné temporaire d'une polarisation respective sont formées numériquement, pour chaque polarisation, par comparaison des phases des deux signaux de quadrature de chaque segment surveillé et par multiplication des amplitudes des deux signaux de quadrature,
- les signaux de quadrature combinés temporaires de chaque polarisation sont additionnés et forment un signal de quadrature combiné ($I_{12}$, $Q_{12}$) et
- l'environnement acoustique de la fibre de verre (30) est reconstruit à partir d'une pluralité de signaux de quadrature combinés.

4.  Procédé selon la revendication 3, **caractérisé en ce que** le signal lumineux est produit au moyen d'un laser (10), l'impulsion de lumière périodique est produite à partir de là dans un conformateur d'impulsions (21) et introduite dans la fibre de verre (30), dans lequel le signal lumineux rétrodiffusé est extrait de la fibre de verre et amené à un récepteur optique direct en quadrature à double polarisation (41), les signaux en phase et les signaux en quadrature qui y sont produits sont enregistrés et sont amenés à un réseau de multiplication et d'addition/soustraction (100) pour former les composantes du signal de quadrature combiné ($I_{12}$, $Q_{12}$).

5.  Procédé selon la revendication 4, **caractérisé en ce que** le récepteur direct en quadrature à double polarisation (41) est un hybride optique à 90 degrés à double polarisation (42), dont les sorties sont guidées via des photo-détecteurs différentiels (51-54) et des filtres passe-bas (81-84).

6.  Procédé selon la revendication 4, **caractérisé en ce que** le récepteur direct en quadrature à double polarisation (41), après un séparateur de polarisation (43) du côté entrée, contient deux coupleurs optiques 3 x 3 (45, 46), dont les sorties sont guidées via des photodétecteurs (61-66), des matrices (71-72) et des filtres passe-bas (61-66).

7.  Procédé selon l'une des revendications 2 à 6, **caractérisé en ce que** des signaux de quadrature combinés ($I_{12}$, $Q_{12}$) venant de segments surveillés ayant plusieurs longueurs différentes sont formés.

8.  Procédé selon la revendication 1, **caractérisé en ce que** :

    - le signal lumineux est une double impulsion périodique constituée respectivement de deux impulsions,
    - une des impulsions est modulée en phase par rapport à l'autre,
    - la puissance du signal lumineux rétrodiffusé, qui contient une superposition des deux impulsions, est échantillonnée à plusieurs instants d'échantillonnage déterminés ($\tau_1$, $\tau_2$) et enregistrée, dans lequel chaque instant d'échantillonnage correspond à un segment surveillé de la fibre de verre (30),
    - un signal de quadrature combiné ($I_{12}$, $Q_{12}$) est formé et
    - l'environnement acoustique de la fibre de verre (30) est reconstruit à partir d'une pluralité de signaux de quadrature combinés.

9.  Procédé selon la revendication 8, **caractérisé en ce que** le signal lumineux est produit au moyen d'un laser (10), la double impulsion périodique est produite à partir de celui-ci dans un conformateur d'impulsions optiques avec modulateur de phase (22) et est guidée dans la fibre optique (30), dans lequel le signal lumineux rétrodiffusé est extrait de la fibre optique et transmis via un photo-détecteur (68) à un dispositif de mémoire, à partir duquel les composantes du signal de quadrature combiné ($I_{12}$, $Q_{12}$), selon les formules

$$I_{12} = \mathrm{Re}((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})),$$

et

$$Q_{12} = \mathrm{Im}((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})),$$

sont produites par une reconstitution analytique du signal avec moyen de blocage de courant continu et convertisseur abaisseur (121).

10. Procédé selon la revendication 9, **caractérisé en ce que** le conformateur d'impulsions optiques avec modulateur de phase (22) contient deux modulateurs de Mach-Zehnder excités.

**11.** Procédé selon la revendication 9, **caractérisé en ce que** le conformateur d'impulsions optiques avec modulateur de phase (22) contient un modulateur de Mach-Zehnder ayant deux excitations.

**12.** Procédé selon la revendication 9, **caractérisé en ce que** le conformateur d'impulsions optiques avec modulateur de phase (22) contient un modulateur de phase optique (210) et au moins un conformateur d'impulsions optiques (211, 212) .

**13.** Procédé selon la revendication 9, **caractérisé en ce que** :

- le conformateur d'impulsions optiques avec modulateur de phase (22) contient un générateur de haute fréquence (220),
- la phase de ce dernier est modulée, et
- le conformateur d'impulsions optiques avec modulateur de phase (22) contient au moins un modulateur acousto-optique (224, 225) .

**14.** Dispositif pour exécuter le procédé selon l'une des revendications 1 à 13, **caractérisé en ce que** :

- au moins un élément (31) directionnel est prévu, avec lequel un signal lumineux rétrodiffusé peut être extrait de la fibre de verre (30), et
- au moins une unité de traitement (41, 100, 121, 122) du signal lumineux rétrodiffusé est prévue, laquelle est configurée pour former le signal de quadrature combiné ($I_{12}$, $Q_{12}$) selon les formules suivantes

$$I_{12} = \mathrm{Re}((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})),$$

et

$$Q_{12} = \mathrm{Im}((I_{1x} + i \cdot Q_{1x}) \cdot (I_{2x} - i \cdot Q_{2x}) + (I_{1y} + i \cdot Q_{1y}) \cdot (I_{2y} - i \cdot Q_{2y})),$$

dans lesquelles

$I_{1x}$ et $Q_{1x}$ représentent respectivement une composante de signal en phase et en quadrature d'un signal rétrodiffusé à un endroit plus proche dans une direction de polarisation x,
$I_{2x}$ et $Q_{2x}$ représentent respectivement une composante de signal en phase et en quadrature d'un signal rétrodiffusé à un endroit plus éloigné dans la direction de polarisation x,
$I_{1y}$ et $Q_{1y}$ représentent respectivement une composante de signal en phase et en quadrature d'un signal rétrodiffusé à l'endroit plus proche dans une direction de polarisation y, et
$I_{2y}$ et $Q_{2y}$ représentent respectivement une composante de signal en phase et en quadrature d'un signal rétrodiffusé à l'endroit plus éloigné dans la direction de polarisation y.

**15.** Dispositif selon la revendication 14, **caractérisé en ce que**

- un laser (10) destiné à produire le signal lumineux est prévu,
- le laser (10) est connecté à une unité de traitement (41), de telle manière qu'une partie de cette lumière laser peut être utilisée en tant qu'oscillateur local (LO) pour une démodulation cohérente et une limitation de bande du signal lumineux rétrodiffusé, et
- les composantes ($I_{12}$, $Q_{12}$) des signaux de quadrature combinés peuvent être formées numériquement dans une autre unité de traitement (100).

**16.** Dispositif selon la revendication 15, **caractérisé en ce que** :

- un récepteur direct optique de quadrature à double polarisation (41) est prévu, avec lequel des signaux en phase et des signaux en quadrature peuvent être produits à partir du signal lumineux rétrodiffusé, et
- celui-ci est connecté à un réseau de multiplication et d'addition/soustraction (100) pour former les composantes du signal de quadrature combiné ($I_{12}$, $Q_{12}$) .

**17.** Dispositif selon la revendication 16, **caractérisé en ce que** le récepteur direct en quadrature à double polarisation (41) est un hybride optique à 90 degrés à double polarisation (42), dont les sorties sont guidées via des photo-détecteurs différentiels (51-54) et des filtres passe-bas (81-84).

**18.** Procédé selon la revendication 16, **caractérisé en ce que** le récepteur direct en quadrature à double polarisation (41), après un séparateur de polarisation (43) du côté entrée, contient deux coupleurs optiques 3 x 3 (45, 46), dont les sorties sont guidées via des photodétecteurs (61-66), des matrices (71-72) et des filtres passe-bas (61-66) .

**19.** Dispositif selon la revendication 16, **caractérisé en ce que** :

- un laser (10) destiné à produire le signal lumineux est prévu,
- un conformateur d'impulsions optiques avec modulateur de phase (22) pour produire une double impulsion périodique est monté en aval du laser (10), dans lequel le conformateur d'impulsions optiques avec modulateur de phase est connecté à la fibre de verre (30), et
- l'élément directionnel (31) est connecté par le biais d'un photo-détecteur (68) à une reconstitution de signal analytique avec moyen de blocage de courant continu et convertisseur abaisseur (121), avec laquelle les composantes du signal de quadrature combiné ($I_{12}$, $Q_{12}$) peuvent être produites.

**20.** Dispositif selon la revendication 19, **caractérisé en ce que** le conformateur d'impulsions optiques avec modulateur de phase (22) contient deux modulateurs de Mach-Zehnder excités.

**21.** Dispositif selon la revendication 19, **caractérisé en ce que** le conformateur d'impulsions optiques avec modulateur de phase (22) contient un modulateur de Mach-Zehnder à double excitation.

**22.** Dispositif selon la revendication 19, **caractérisé en ce que** le conformateur d'impulsions optiques avec modulateur de phase (22) contient un modulateur de phase optique (210) et au moins un conformateur d'impulsions optiques (211, 212).

**23.** Dispositif selon la revendication 19, **caractérisé en ce que** :

- le conformateur d'impulsions optiques avec modulateur de phase (22) contient un générateur de haute fréquence (220),
- un modulateur de phase (221) est prévu, avec lequel la phase du générateur de haute fréquence (220) peut être modulée, et
- le conformateur d'impulsions optiques avec modulateur de phase contient en outre au moins un modulateur acousto-optique (224, 225).

# FIG 1

FIG 2

## FIG 3

## FIG 4

## FIG 5

## FIG 6

## FIG 7

## FIG 8

## FIG 9

$\Delta\varphi_{TX}=0$

$\Delta\varphi_{TX}=\pi/2$

$\Delta\varphi_{TX}=\pi$

$\Delta\varphi_{TX}=3\pi/2$

$\Delta\varphi_{TX}=2\pi$
or
$\Delta\varphi_{TX}=0$

FIG 10

FIG 11

# FIG 12

phase1                          22

216        215

217

phase2

# FIG 13

22

210        211

Pulse
shaper

213              214

phase              gate

## FIG 14

22

26    210    211    28    27

Pulse
shaper

$V_g \cdot \tau_d$

Pulse
shaper

213    212    214

phase    gate

## FIG 15

22

220

HF Gen.    221    222

PM    Gate

224

26

AOM

28    27

$V_g \cdot \tau_d$

Gate

225

223

AOM

213    214

phase    gate

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 7872736 B2, Rogers
- US 7652245 B2, Crickmore
- US 20120162639 A
- WO 2012030814 A2

### In der Beschreibung aufgeführte Nicht-Patentliteratur

- **T. NIEMEIER ; R. ULRICH.** Quadrature outputs from fiber interferometer with 4x4 coupler. *Opt. Lett.,* 1986, vol. 11, 677-679
- **Y. TAKUSHIMA et al.** Measurement of Differential Phasor Diagram of Multilevel DPSK Signals by Using an Adjustment-Free Delay Interferometer Composed of a 3x3 Optical Coupler. *IEEE Journal of Lightwave Technology,* 2009, vol. 27 (6), 718-730
- **XIE, WINZER et al.** Colorless coherent receiver using 3x3 coupler hybrids and single-ended detection. *Optical Express,* 2012, vol. 20-2, 1164
- **TAKUSHIMA et al.** Measurement of Differential Phasor Diagram of Multilevel DPSK Signals by Using an Adjustment-Free Delay Interferometer Composed of a 3x3 Optical Coupler. *IEEE Journal of Lightwave Technology,* 2009, vol. 27 (6), 718-730